# EUROPEAN PATENT SPECIFICATION

(11) **EP 1 120 371 B1**
(45) Date of publication and mention of the grant of the patent: **12.10.2005**
(21) Application number: 01200290.3
(22) Date of filing: 29.01.2001
(51) Int. Cl.: B65G 69/00

(54) **Device for blocking a vehicle**
Vorrichtung zum Blockieren eines Fahrzeuges
Dispositif pour le bloquage d'un véhicule

(30) Priority: 28.01.2000 NL 1014228
(43) Date of publication of application: 01.08.2001
(73) Proprietor: STERTIL B.V., NL-9288 CA Kootstertille (NL)
(72) Inventor: Berends, Jan, 9288 ZG Kootstertille (NL)
(74) Representative: Grootscholten, Johannes A.M.

(56) References cited:
- EP-A- 0 919 496
- WO-A-95/18029
- US-A- 5 896 957

## Description

The invention relates to a device for blocking a vehicle. Such a device is known in the art, e.g. from EP-A-0.919.496. The pre-characterising portion of claim 1 reflects and defines devices therefrom.

Devices of this type are used particularly at loading platforms, where a truck with its loading opening at the rear can be manoeuvred against a loading opening or platform of a storage area. The device herein prevents the truck being able to roll away, which is particularly dangerous when for instance cargo is being transported into and/or out of the truck with fork-lift trucks.

In the known device the wheel blocking means are arranged movably on the carriage. The wheel blocking means are brought in an operational wheel blocking position over the upward guide surface, when the carriage is dragged along by the vehicle over a separate guide track.

The invention has for an object to provide a device for blocking a vehicle of the type specified in the preamble which is of an simpler construction, while providing more and safer features.

This object is, according to the invention, achieved by such a known device with additionally the features defined in the characterising portion of claim 1. At a front end the guide track comprises a guide surface extending upward from close to the driveway and having connected thereto a guide surface which extends substantially parallel to the driveway, and a part of the carriage carrying the wheel blocking means is displaceable along the guide track, while substantially following both upward extending and horizontal guide surfaces, between a forward position close to the driveway and a rear position at a distance above the driveway. In the forward position a truck can drive over the wheel blocking means with its rear wheel, since these are situated in a low position. As the truck moves further to the rear the wheel blocking means rise upward and then protrude in front of the wheel of the truck for blocking. It is also possible to displace the entire vehicle together with the carriage, after the vehicle has been detected by the sensor, by activating the motor, especially since there are no moving part interposed between the carriage and the wheel blocking means. The wheel blocking means can hereby be moved in reliable manner against the front side of the wheel for blocking and be pressed there against with some force, which could even suffice to displace the entire vehicle. As soon as the truck has been manoeuvred into the desired position, with the wheel blocking means lying against the front side of the wheel for blocking, the locking means are set into operation by the truck being blocked in the chosen position.

The device can be embodied in exceptionally simple manner since no separate drive means are required for driving movement of the wheel blocking means relative to the carriage into a operational position.

A further advantage of the invention is that the wheel engaging means are carried into a position acting on a wheel, while the carriage is moved between the stated positions under the operation of the drive means, and more specifically the motor. Devices known from for instance from EP-A-0.919.496 use a wheel catcher on the rear end of the carriage to displace the carriage under the influence of the movement of a wheel contacted by the wheel catcher. Such a known device becomes particularly complex as a result of the measures which are necessary here to adjust the wheel catcher relative to the wheel engaging means in order to adjust the distance there between to the diameter of the wheel contacted by the wheel catcher. Another problem with such known devices is that due to safety regulations panels are often arranged very close to the wheels of a truck or vehicle in order to prevent accidents wherein people can fall under the wheels. Such panels impede proper operation of the wheel catcher. The wheel catcher is set into action too early by contact with such panels, and this is also the case with splash flaps behind the wheels. If there is premature movement of the carriage as a result of contact between the wheel catcher and protective panels or splash flaps, the wheel of the vehicle can cause damage to the wheel engaging means when these attempt prematurely to move into a position acting on the wheel and the wheel of the vehicle comes to lie on the wheel engaging means, which are then set into full or partial operation too soon. In such an undesired situation the wheel engaging means, and even that part of the carriage with the wheel engaging means, can be dislocated, which results in considerable damage, not only to the known device but also to the surrounding road surface, the wheel of the vehicle, and so on. In a device according to the present invention with drive means for displacing the carriage along the guide track such problems are effectively prevented. The combination of the single drive acting on the carriage together with the two guide surfaces moreover achieves that driving of the carriage with the wheel of a vehicle simultaneously also results in the wheel blocking means being brought into active position. This results in a considerable simplification.

When a vehicle wheel for blocking is detected by the sensor, the control means can selectively set the drive means, and more particularly the motor, into operation so that a rapid and automatic operation of the device is achieved.

A favourable embodiment is characterized in claim 2. Reversing over the wheel blocking means can hereby take place without there being any obstruction.

In suitable manner the sensor is a pressure-sensitive sensor according to claim 3, which is arranged on the driveway behind the recess for the wheel blocking means. As soon as the rear wheel of the truck for blocking has passed over the blocking means situated in the recess and activates the sensor arranged therebehind, the drive means are switched on and the wheel blocking means will be driven against the rear wheel. With a suitable embodiment of the drive means the truck can herein further be reversed into the desired end position, since the wheel blocking means press the rear wheel of the truck further rearward.

A suitable drive device which comprises few components and is thereby economic is characterized in claim 4.

The flexible member of the drive device is suitably formed by a chain, according to claim 5. In suitable manner the chain can transmit great forces and can be embodied very sturdily. The associated chain pulleys, as applied for instance in anchor capstans of ships, can engage the chains in a non-slip manner.

The measure of claim 6 is applied in suitable manner. The drive can move the wheel for blocking to the rear with a force maximized by the slip coupling until the vehicle for blocking has been urged into its end position. The drive device can then be switched off with means which are further self-evident, such as for instance a sensor which detects the slip of the slip coupling.

The invention will be further elucidated in the following description with reference to the annexed figures.
Figure 1 shows a side view of an embodiment of the device according to the invention in a first operating position.
Figure 2 shows the device of figure 1 in a second operating position.
Figure 3 is a perspective view of a loading station in which a number of devices according to the invention are arranged.
Figure 4 shows a partly broken-away perspective view according to arrow IV in figure 3.
Figure 5 shows a partly broken-away perspective view of another embodiment variant.

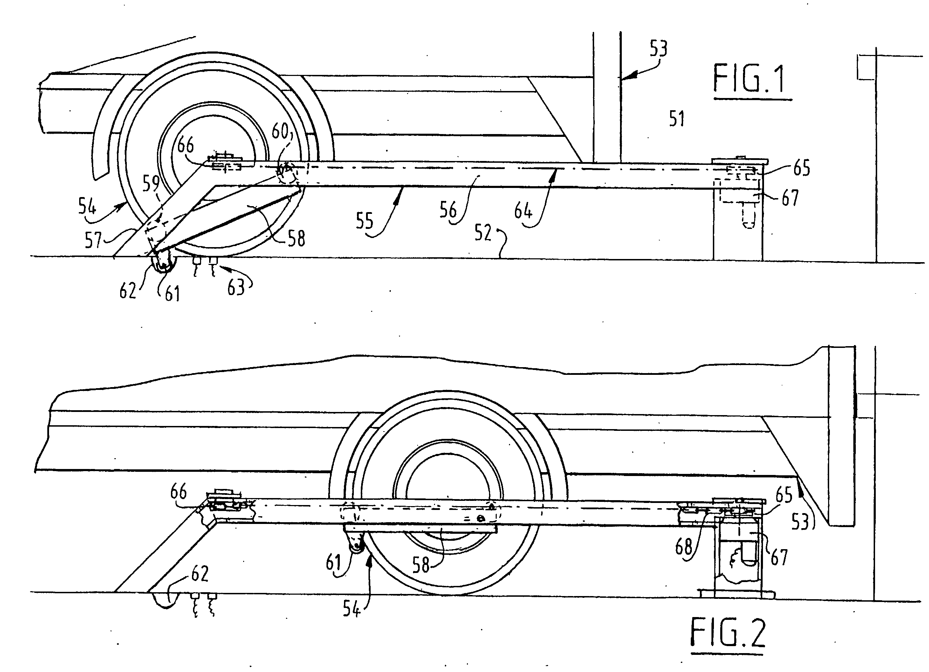

The device 51 according to the invention shown in side view in figure 1 is intended for blocking a vehicle 53, particularly by blocking a wheel 54 thereof during displacement.

The device 51 comprises a guide track 55 which is disposed along a driveway 52 and along which a carriage 58 is displaceable from the forward position shown in figure 1 to a position lying further to the rear as shown in figure 2.

At the front end, shown on the left in the figures, the guide track 55 comprises a guide surface 57 which extends upward from close to driveway 52 and which has a guide surface 56 connected thereto which extends substantially parallel to the driveway.

In the embodiment shown here the guide surfaces 56 and 57 are formed by parts of the box profile from which guide track 55 is constructed. Guide surfaces 56 and 57 form in particular those parts over which the wheels 59, 60 of carriage 58 roll.

The front part of carriage 58 carries wheel blocking means in the form of a transversely protruding rod 61.

In the situation shown in figure 1, where carriage 58 is situated in its forward position, wheel blocking rod 61 is received in a recess 62 in the driveway. In this situation the wheel 54 of truck 53 can simply pass over the wheel blocking 61 in rearward direction.

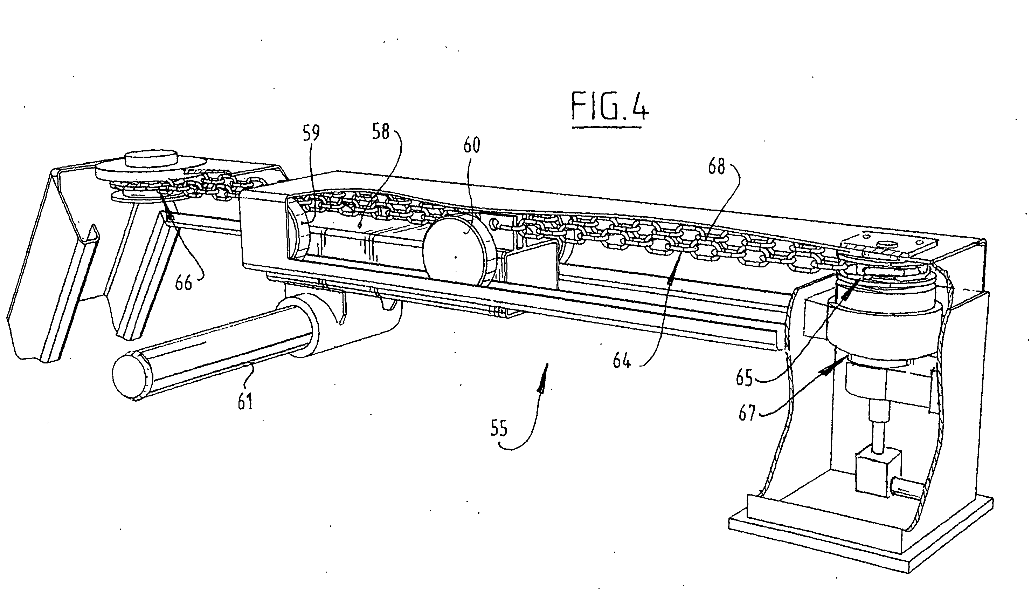

Device 51 is further provided with a drive 64 which engages on carriage 58. In the preferred embodiment shown here, drive 64 is formed by a chain drive which comprises a freewheel pulley 66 close to the front end of the part 56 of guide track 55 extending parallel to driveway 52 and a driven chain pulley 65 at the rear end of this part. At least chain pulley 65 is of the type with recesses in its periphery in which the links of a chain can fall, such that a non-slip drive of the chain is possible. A chain 68 is arranged round chain pulleys 65 and 66 which, as shown in more detail in figure 4, is connected to the rear end of carriage 58.

Chain pulley 65 is connected to a drive motor via a suitable transmission 67.

The drive 64 is controlled by a control device which is not further shown in detail but which is self-evident, and which comprises a sensor 63 which detects the presence of a wheel 54 to be blocked. This sensor can for instance comprise a light shaft, but in the preferred embodiment shown here is formed by a pressure-sensitive sensor. This is arranged, as shown clearly in figures 1 and 2, behind the recess 62 in which the wheel blocking means 61 lie in the rest position as shown in figure 1.

As soon as the wheel 54 for blocking has passed over wheel blocking means 61, this wheel will activate the pressure-sensitive sensor 63, whereby.the control means switch on the drive. Chain 68 is hereby driven such that carriage 58 is moved to the right as seen in figures 1 and 2.

It will be apparent from a comparison of figures 1 and 2 that, during the rearward movement of carriage 58, the front end on which the wheel blocking rod 61 is arranged moves upward such that it comes to lie in a blocking position in front of wheel 54. With a further rearward movement of carriage 58 the wheel blocking rod 61 remains at this height, as shown in figure 2.

The device can be embodied such that the force to be produced by drive 64 is so great that truck 53 can thereby be driven rearward into the end position, with its rear end against a stop block. Alternatively, the device can be embodied such that just sufficient drive power is produced to displace the carriage such that the carriage only co-displaces with the truck 53 which is propelled by its own drive. In this latter case the drive 64, and in particular transmission 67, will be embodied such that it is self-locking, i.e. it is blocked against displacement resulting from a force exerted on the carriage.

When truck 53 has arrived in its end position the drive of carriage 58 is locked.

This is inherently possible due to the above described self-locking embodiment of the drive or locking means which engage on the chain or the carriage with separate blocking means, not further shown here, in order to lock this in the blocking position. Truck 53 is thus blocked against forward movements.

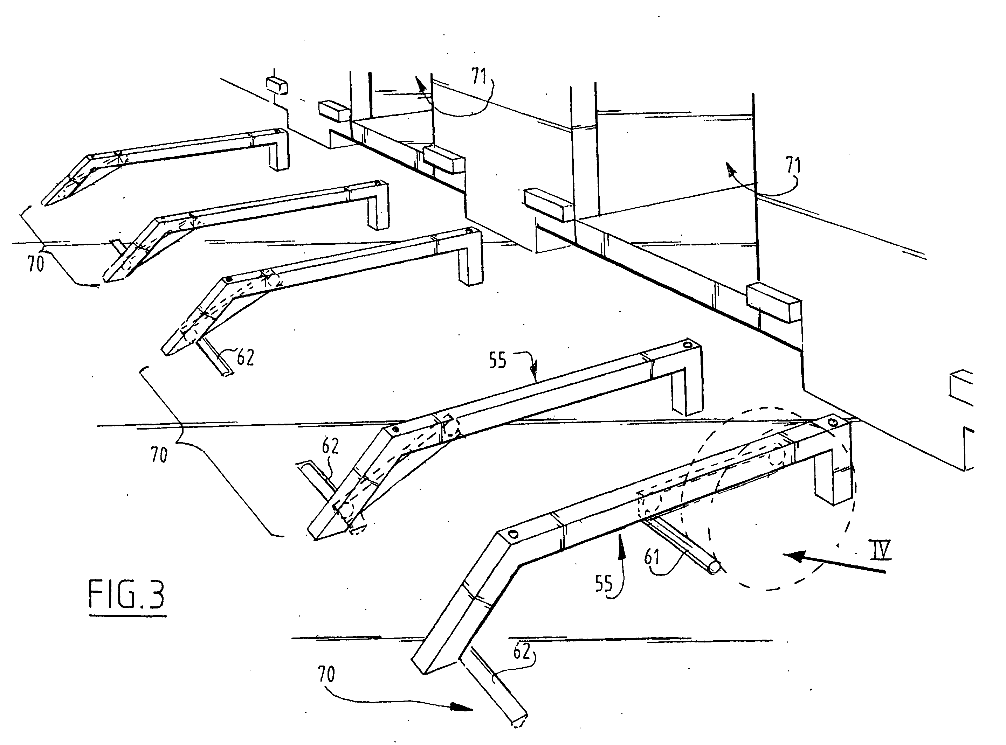

In a suitable application of the device according to the invention as shown in figure 3, a pair 70 of devices as shown in figure 2 is arranged in each case in front of an opening 71 against which the truck must be parked in reverse. These openings 71 can for instance be loading and unloading openings in a warehouse, wherein cargo can be transported from truck 53 into the warehouse or from the warehouse into the truck. Using the devices 51 according to the invention the truck 53 is secured in reliable manner during the loading and unloading, so that the truck cannot move away unintentionally from opening 71 during loading and unloading. This could result in great danger for the personnel carrying out the loading and unloading, particularly when use is made therein of a fork-lift truck which travels from the warehouse into truck 53 and back again.

The embodiment with a device according to the invention per opening 71 will normally be the standard embodiment. The dual arrangement as shown in figure 3 is desirable when vehicles with steerable rear axle must be reversed between the devices and the tractive unit is not in front of the vehicle. In that case the vehicle can be pulled rearward into the desired position using the drive means of the two devices 51. The device according to the invention likewise functions as wheel constrainer, whereby in such a case the steerable rear axle, which tends to drift outward, is enclosed between the two devices 51.

Figure 4 shows in somewhat more detail the construction of the preferred embodiment of the device as shown in the foregoing figures.

Guide track 55 is herein manufactured from a generally C-shaped profile which is also used in particular for lifting columns of vehicle lifts. Carriage 58 is, as noted above, provided at the front respectively rear end with pairs of wheels 59, 60 which are arranged fitting into the height of the C-profile. It will be apparent that due to the wheels 59, 60 being enclosed in C-profile 23 the carriage is locked against both a transverse and a vertical displacement.

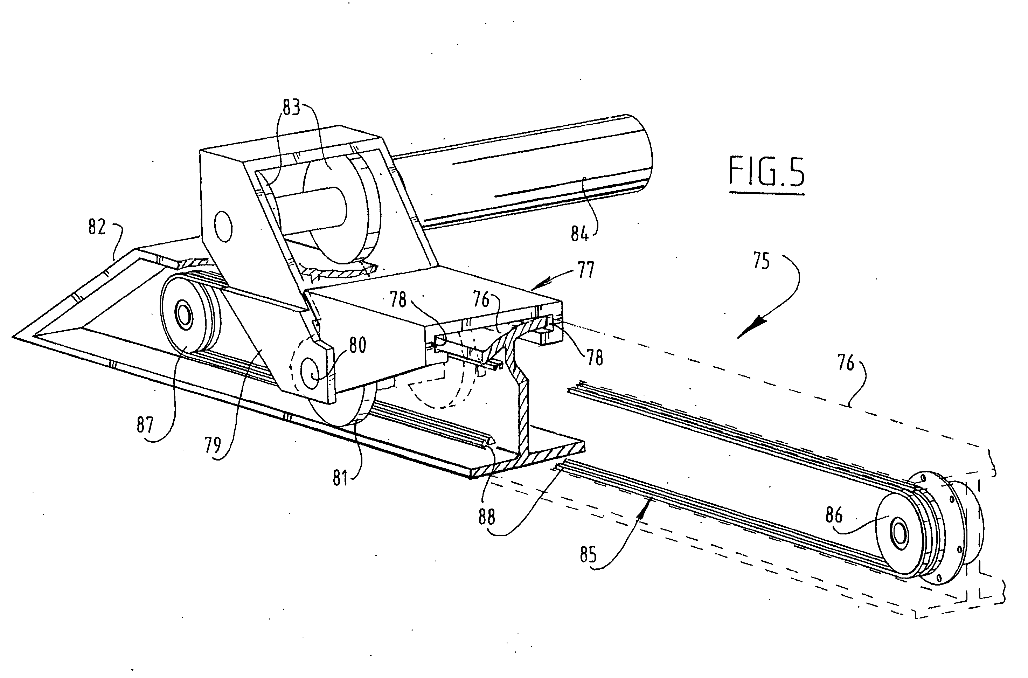

The alternative embodiment of the device according to the invention shown in figure 5 comprises a guide track 76 which is manufactured from an I-profile beam. The upper surface of this guide track 76 forms the guide surface which extends parallel to the driveway. Arranged at the front end is a plate 82 which forms the rising guide surface.

A carriage 77 is arranged on guide track 76. The frame hereof comprises a guide 78 which engages in reasonably close-fitting manner round the upper flange of the I-profile so that occurring transverse forces and rotational forces are transmitted via guide 78 onto guide track 76.

Mounted on guide 78 are wheels 81 which have a diameter substantially corresponding with the distance of the opposing flanges of the I-profile. In the drawn embodiment wheels 81 are arranged on either side of guide track 76, which wheels are each received in the profile on a side thereof.

A swivel frame 79 is mounted on the guide 78 of carriage 77 by means of a shaft 80. The wheel blocking protrusion 84 is mounted on this swivel frame 79. Two wheels 83 are mounted inside swivel frame 79 in the line of the shaft of wheel blocking protrusion 84. These wheels 83 are in contact with the guide surfaces of guide track 76.

In the drawn situation of device 75, wheels 83 are situated in contact with the upper guide surface of guide track 76 because the wheel blocking 84 is in its high position. It will be apparent that, when carriage 77 moves forward, wheels 83 can move downward at a given moment along the rising guide surface 82, whereby the wheel blocking 84 arrives in its low position in which a vehicle wheel can drive thereover. In a manner further analogous with the above discussed embodiment, after the passage of a vehicle wheel a drive device 85 is set into operation which moves carriage 77 over guide track 76 to the right as seen in figure 5. Wheels 83 herein move upward along the rising guide surface 82, wherein the wheel blocking 84 moves to a blocking height in front of the wheel for blocking, whereafter the carriage moves further to the rear, but to the right as seen in figure 5.

Driving of carriage 77 takes place by means of drive means 85 which in this embodiment comprise a hydraulic motor with pulley 86 mounted on the web of guide track 76 and a freewheel pulley 87 mounted on the front end of guide track 76. Arranged over the pulleys are ropes 88 which, in a manner which is not shown but which is self-evident, are connected to carriage 77 in order to enable driving thereof reciprocally along guide track 76.

It is noted that the invention is not limited to the embodiments shown in the figures. An electronically controlled drive can thus be applied instead of a slip coupling in the drive. The resistance which the truck encounters during positioning can herein be precisely adjusted. A detection can moreover be added which indicates that the carriage is in the starting position. In the case of multi-axle vehicles it is hereby possible to ensure that only the rear wheel has passed the pressure sensors, whereafter the system can be set into operation.

## Claims

1. Device for blocking a vehicle (53), comprising:
- a guide track (55) which is disposed along a driveway (52);
- a carriage (58), which engages on the guide track and is displaceable there-along in guided manner and which is provided with transversely protruding wheel engaging means (61), which comprise at least wheel blocking means, and locking means for locking the carriage; and
- drive means for displacing the carriage between the forward and rearmost position along the guide track,
wherein at a front end the guide track comprises a guide surface (57) extending upward from close to the driveway and having connected thereto a guide surface (56) which extends substantially parallel to the driveway, and a part of the carriage carrying the wheel blocking means is displaceable along the guide track, while substantially following both upward (57) and parallel (56) guide surfaces, between a forward position close to the driveway and a rear position at a distance above the driveway
**CHARACTERISED IN THAT**
the drive means comprise: a control with at least one sensor (63), which can detect the presence of a vehicle wheel (54) close to the front end of the device; and a selectively actuable motor (67) to displace the carriage along the guide track (55).

2. Device as claimed in claim 1, wherein in the forward position of the carriage the wheel blocking means are received in a recess (62) in the driveway.

3. Device as claimed in claim 1 or 2, wherein the sensor (63) is a pressure-sensitive sensor which is arranged on the driveway behind the recess for the wheel blocking means (61).

4. Device as claimed in any of the foregoing claims,
wherein the drive means comprise a first wheel (65) which is mounted close to the rear end of the device, a second wheel (66) mounted close to the front end and an endless flexible member which engages round these wheels and is connected to the carriage, wherein one of the wheels is connected to the motor (67).

5. Device as claimed in claim 4, wherein the flexible member is a chain (68) and the wheels are chain pulleys.

6. Device as claimed in claim 4 or 5, wherein the drive means comprise a slip coupling connected between the driven wheel (65) and the motor (67).

## Patentansprüche

1. Vorrichtung zum Blockieren eines Fahrzeugs (53), aufweisend:
- eine Führungsschiene (55), die entlang einer Fahrbahn (52) angeordnet ist;
- einen Schlitten (58), der in die Führungsschiene eingreift und in einer geführten Art und Weise daran entlang versetzbar ist, und der mit einer transversal vorstehenden Radeingriffsvorrichtung (61) versehen ist, die mindestens eine Radblockiervorrichtung aufweist, und eine Verriegelungsvorrichtung zum Verriegeln des Schlittens; und
- eine Antriebsvorrichtung zum Versetzen des Schlittens zwischen der vordersten und hintersten Position entlang der Führungsschiene,
- wobei ein vorderes Ende der Führungsschiene eine Führungsoberfläche (57) aufweist, die sich von nahe der Fahrbahn nach oben erstreckt und mit der eine Führungsoberfläche (56) verbunden ist, die sich im Wesentlichen parallel zur Fahrbahn erstreckt, und wobei ein Teil des Schlittens, der die Radblockiervorrichtung trägt, entlang der Führungsschiene versetzbar ist, während er im Wesentlichen sowohl den Führungsoberflächen nach oben (57) und den Führungsoberflächen parallel (56) folgt, zwischen einer vorderen Position nahe der Fahrbahn und einer hinteren Position in einem Abstand oberhalb der Fahrbahn,
**dadurch gekennzeichnet, dass** die Antriebsvorrichtung aufweist: eine Steuerung mit mindestens einem Sensor (63), der die Anwesenheit eines Fahrzeugrades (54) nahe dem vorderen Ende der Vorrichtung erfassen kann; und einen wahlweise betätigbaren Motor (67), um den Schlitten entlang der Führungsschiene (55) zu ersetzen.

2. Vorrichtung gemäß Anspruch 1, wobei die Radblockiervorrichtungen in der vorderen Position des Schlittens in einer Ausnehmung (62) in der Fahrbahn aufgenommen sind.

3. Vorrichtung gemäß Anspruch 1 oder 2, wobei der Sensor (63) ein druckempfindlicher Sensor ist, der auf der Fahrbahn hinter der Ausnehmung für die Radblockiervorrichtung (61) angeordnet ist.

4. Vorrichtung gemäß einem der vorhergehenden Ansprüche, wobei die Antriebsvorrichtung ein erstes Rad (65) aufweist, das nahe dem hinteren Ende der Vorrichtung befestigt ist, ein zweites Rad (66), das nahe dem vorderen Ende befestigt ist, und ein endloses flexibles Bauteil, das um diese Räder geschlungen ist und mit dem Schlitten verbunden ist, wobei eines der Räder mit dem Motor (67) verbunden ist.

5. Vorrichtung gemäß Anspruch 4, wobei das flexible Bauteil eine Kette (68) ist, und die Räder Kettenräder sind.

6. Vorrichtung gemäß Anspruch 4 oder 5, wobei die Antriebsvorrichtung eine Schlupfkupplung aufweist, die zwischen dem angetrieben Rad (65) und dem Motor (67) verbunden ist.

## Revendications

1. Dispositif permettant de bloquer un véhicule (53), comprenant :
un rail de guidage (55) qui est disposé le long d'une voie d'accès (52) ;
un chariot (58) qui se met en prise sur le rail de guidage et peut être déplacé le long de celui-ci d'une manière guidée et qui est pourvu de moyens de mise en prise de roue (61) faisant saillie de manière transversale, qui comprennent des moyens de blocage de roue ou des moyens de verrouillage pour verrouiller le chariot ou les deux à la fois ; et
des moyens d'entraînement pour déplacer le chariot entre la position vers l'avant et la position vers l'arrière le long du rail de guidage,
dans lequel au niveau d'une extrémité avant, le rail de guidage comprend une surface de guidage (57) s'étendant vers le haut à partir de la proximité de la voie d'accès et ayant raccordé à celle-ci une surface de guidage (56) qui s'étend sensiblement parallèlement à la voie d'accès, et une partie du chariot portant les moyens de blocage de roue peut se déplacer le long du rail de guidage, tout en suivant sensiblement les deux surfaces de guidage vers le haut ((57) et parallèle (56), entre une position vers l'avant à proximité de la voie d'accès et une position vers l'arrière à une certaine distance au dessus de la voie d'accès,
**caractérisé en ce que** les moyens d'entraînement comprennent une commande avec au moins un capteur (63), qui peut détecter la présence d'une roue (54) de véhicule à proximité de l'extrémité avant du dispositif ; et un moteur (67) pouvant être sélectivement actionné pour déplacer le chariot le long du rail de guidage (55).

2. Dispositif selon la revendication 1, dans lequel, dans la position vers l'avant du chariot, les moyens de blocage de roue sont reçus dans un enfoncement (62) dans la voie d'accès.

3. Dispositif selon la revendication 1 ou 2, dans lequel le capteur (63) est un capteur sensible à la pression qui est agencé sur la voie d'accès derrière l'enfoncement pour les moyens de blocage de roue (61).

4. Dispositif selon l'une quelconque des revendications précédentes, dans lequel les moyens d'entraînement comprennent une première roue (65) qui est montée à proximité de l'extrémité arrière du dispositif, une seconde roue (66) montée à proximité de l'extrémité avant et un élément sans fin souple qui se met en prise autour de ces roues et est raccordé au chariot, l'une des roues étant raccordée au moteur (67).

5. Dispositif selon la revendication 4, dans lequel l'élément souple est une chaîne (68) et les roues sont des poulies à chaîne.

6. Dispositif selon la revendication 4 ou 5, dans lequel les moyens d'entraînement comprennent un couplage coulissant raccordé entre la roue entraînée (65) et le moteur (67).
